# EUROPÄISCHE PATENTSCHRIFT

(11) **EP 1 480 327 B1**
(45) Veröffentlichungstag und Bekanntmachung des Hinweises auf die Patenterteilung: **21.11.2007**
(21) Anmeldenummer: 03011406.0
(22) Anmeldetag: 20.05.2003
(51) Int. Cl.: H02P 27/06, H02K 9/22, F04D 13/06, H01L 35/28, H02K 11/00

(54) **Elektromotor**
Electric motor
Moteur électrique

(43) Veröffentlichungstag der Anmeldung: 24.11.2004
(73) Patentinhaber: GRUNDFOS A/S, DK-8850 Bjerringbro (DK)
(72) Erfinder: Vadstrup, Pierre, 8381 Tilsit (DK)
(74) Vertreter: Vollmann, Heiko

(56) Entgegenhaltungen:
- EP-A- 0 759 507
- US-A- 5 242 403
- US-A1- 2001 023 591
- US-A1- 2002 092 557
- PATENT ABSTRACTS OF JAPAN vol. 2000, no. 01, 31. Januar 2000 (2000-01-31) & JP 11 299289 A (SHARP CORP), 29. Oktober 1999 (1999-10-29)
- PATENT ABSTRACTS OF JAPAN vol. 2002, no. 09, 4. September 2002 (2002-09-04) & JP 2002 153036 A (SUMITOMO SPECIAL METALS CO LTD), 24. Mai 2002 (2002-05-24)
- PATENT ABSTRACTS OF JAPAN vol. 010, no. 332 (E-453), 12. November 1986 (1986-11-12) & JP 61 139248 A (FANUC LTD), 26. Juni 1986 (1986-06-26)
- HERING, E.: "Physik für Ingenieure" , VDI-VERLAG GMBH , DÜSSELDORF XP002255639 * Seite 686 - Seite 688 *

## Beschreibung

Die Erfindung betrifft ein Pumpenaggregat mit einem Elektromotor mit einer elektronischen Steuerung gemäß den in Anspruch 1 angegebenen Merkmalen.

Elektromotoren werden heutzutage auf nahezu allen technischen Gebieten eingesetzt. Man ist daher bestrebt, den Wirkungsgrad solcher Motoren und damit deren Effizienz zu steigern. Insbesondere bei Motoren, die im Langzeitbetrieb laufen, wie beispielsweise Antriebsmotoren von Pumpenaggregaten, Kompressoren, Lüfter oder dergleichen lohnen sich Wirkungsgrad steigernde Maßnahmen, da entsprechende Verbrauchseinsparungen zu erwarten sind.

Moderne Elektromotoren weisen eine elektronische Steuerung auf, welche dem eigentlichen Motor vorgeschaltet sind, um aus der netzseitig zur Verfügung stehenden im Wesentlichen konstanten Gleich- oder Wechselspannung ein für den Betrieb des Motors geeignete Spannung zu erzeugen. Hierzu werden typischerweise Umformer, beispielsweise in Form von Frequenzumrichtern eingesetzt, welche einen Eingangskreis aufweisen, in dem die Wechselspannung gleichgerichtet wird, einen Zwischenkreis, in dem das gewünschte Spannungsniveau eingestellt und einen Leistungskreis, in dem die Zwischenkreisspannung entsprechend gesteuert den Motorwicklungen zugeführt wird. Auf diese Weise werden beispielsweise Asynchronmotoren betrieben, aber auch Permanentmagnetmotoren elektronisch kommutiert.

Es zählt zum Stand der Technik, zur Wirkungsgradsteigerung von Aggregaten deren Abwärme technisch zu nutzen, sei es durch zusätzliche Wärmetauscher, Wärmepumpen oder dergleichen. Insbesondere für Motoren kleinerer Bauart sind diese Maßnahmen aus Kostengründen derzeit nicht geeignet.

Darüber hinaus zählt es zum Stand der Technik, zur Nutzung von Abwärme Halbleiterbauelemente, sogenannte Seebeck-Elemente einzusetzen. Aus US-PS 6,019,098 ist es bekannt, solche Seeback-Elemente zur Nutzung der Abwärme eines Kessels einzusetzen. Aus US-PS 5,419,780 ist es bekannt, die Abwärme eines elektronischen Bauelements zur Erzeugung von Strom zur Betreibung eines Lüfters zu nutzen, der dieses Bauelement dann kühlt. Aus US-PS 4,753,682, ist es bekannt, die Abwärme eines Verbrennungsmotors zur Stromerzeugung mittels Seebeck-Elementen zu nutzen. Auch zählt es zum Stand der Technik, die Abwärme elektronischer Bauteile mittels eines oder mehrerer Seebeck-Elemente zu nutzen und die dabei gewonnene Energie der Baugruppe nutzbringend zuzuführen (US-PS 6,066,002).

Darüber hinaus zählt es zum Stand der Technik, Halbleiterbauelemente der vorgenannten Art, nämlich Peltier-Elemente gezielt zum Kühlen einzusetzen. Aus US-PS 5,486,728 ist es bekannt, einen Mikromotor mittels solcher Peltier-Elemente zu kühlen. Diese Peltier-Elemente benötigen jedoch eine zusätzliche Energieversorgung und verschlechtern somit den Wirkungsgrad.

Der nächstliegende Stand der Technik ist die JP 11299289. Diese offenbart:
Elektromotor mit einer elektronischen Steuerung, die einen Frequenzumrichter umfasst, wobei mindestens ein Seebeck-Element vorgesehen ist, dessen eine Seite wärmeleitend mit dem Motor verbunden ist und dessen andere Seite mit einem Kühlmedium in Wärmeleitverbindung steht, wobei die elektrische Ausgangsleistung des Seebeck-Elements in den Leistungskreis des Frequenzumrichters eingebracht wird.

Vor diesem Hintergrund liegt der Erfindung die Aufgabe zugrunde, ein Pumpenaggregat mit einem solchen Elektromotor wirkungsgradmäßig zu verbessern.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung und der Zeichnung angegeben.

Grundgedanke der vorliegenden Erfindung ist es, durch Einsatz mindestens eines Seebeck-Elements Abwärme des Motors, die sonst nicht genutzt werden kann, zur Erzeugung elektrischer Energie einzusetzen. Das grundsätzliche Problem, dass insbesondere bei Elektromotoren kleiner und mittlerer Baugröße die mittels eines Seebeck-Elementes gewonnene elektrische Energie nicht oder nicht wirtschaftlich verwertbar ist, löst die vorliegende Erfindung in geschickter Weise dadurch, dass diese elektrische Energie an geeigneter Stelle der elektronischen Steuerung des Motors zugeführt und somit unmittelbar für Antriebszwecke genutzt werden kann. Dabei ist dafür Sorge zu tragen, dass zu beiden Seiten des Seebeck-Elements nicht nur ein möglichst unterschiedliches Temperaturniveau besteht, sondern auch dafür, dass die Wärmeleitung durch das Seebeck-Element und nicht unter Umgehung desselben erfolgt. Ersteres wird dadurch erreicht, dass eine Seite des Seebeck-Elements wärmeleitend mit dem Motor verbunden ist und die andere Seite mit einem Kühlmedium in Wärmeleitverbindung steht; dies ist das Förderfluid des Pumpenaggregats. Um zu erreichen, dass der Wärmefluss zumindest anteilig durch das Seebeck-Element erfolgt, sind geeignete konstruktive Maßnahmen zu treffen, insbesondere ist dafür Sorge zu tragen, dass in unmittelbarer Umgebung des Seebeck-Elementes keine wärmeleitende Verbindung zwischen den vorgenannten Temperaturniveaus besteht. Dem Elektromotor ist ein Frequenzumrichter vorgeschaltet it, der Teil der elektronischen Steuerung ist. Gemäß der Erfindung speist das Seebeck-Element in den Zwischenkreis des Frequenzumrichters ein, also in einen Teil der elektronischen Steuerung, der Gleichspannung führt. Beim Frequenzumrichter ist der Zwischenkreis sozusagen der Energiespeicher, so dass hier besonders günstig Energie eingespeist werden kann, insbesondere zur Ladung des Zwischenkreiskondensators. Da die vom Zwischenkreis geführte Spannung in der Regel nicht der von dem oder den Seebeck-Elementen abgegebenen Spannung entspricht, insbesondere weil beim Seebeck-Element die Spannung in Abhängigkeit der anliegenden Temperaturdifferenz schwankt, ist gemäß der Erfindung zwischen Seebeck-Element und Zwischenkreis ein DC/DC Konverter geschaltet, welcher für eine entsprechende Anpassung an das Spannungsnetzniveau des Zwischenkreises des Frequenzumrichters sorgt.

Je nach Größe des eingesetzten Motors werden gemäß der Erfindung nicht nur ein, sondern eine Vielzahl von Seebeck-Elementen angeordnet. Diese können je nach Anforderungen parallel oder in Reihe geschaltet werden, um ein brauchbares Spannungs-Stromniveau zu erreichen. Im Folgenden ist zwar von einem Seebeck-Element die Rede, es versteht sich jedoch, dass hiermit auch eine Vielzahl von Seebeck-Elementen gemeint sein können.

Da die von einem Seebeck-Element abgegebene Spannung in Abhängigkeit der anliegenden Temperaturdifferenz steigt und somit auch die vom Seebeck-Element erzeugte elektrische Energie ist es zweckmäßig, das Seebeck-Element dort anzuordnen, wo die meiste Abwärme anfällt bzw. die höchsten Temperaturen zu erwarten sind. Dies ist beim Motor üblicherweise im Wicklungsdraht, weshalb es erstrebenswert ist, eine Seite des Seebeck-Elements möglichst nahe an den Wicklungsdraht, nämlich an die Statorwicklung anzubringen. Gemäß der Erfindung ist daher vorgesehen, eine Seite des Seebeck-Elements wärmeleitend mit der Statorwicklung, und zwar vorzugsweise im Bereich des Wicklungskopfes zu verbinden, also dort, wo der Wicklungsdraht gut zugänglich ist und antriebstechnisch nicht benötigt wird.

Eine vorteilhafte Anordnung des Seebeck-Elements zwischen einem Wicklungsdraht des Stators bzw. einem Teil der Statorwicklung und einem Statorblech ist insbesondere dann zweckmäßig, wenn es sich um einen Polsegmentmotor handelt, also einem Motor, bei dem das Statorblechpaket aus einzelnen Segmenten besteht.

Wenn der Motor ein kappengekühlter Motor ist wird gemäß einer Weiterbildung der Erfindung ein Seebeck-Element zweckmäßigerweise zwischen Stator und Kappe, und zwar vorzugsweise auf der Innenseite der Kappe angeordnet. Dann ist das Seebeck-Element zu einer Seite mit der Statorwicklung wärmeleitend verbunden und zur anderen Seite mit der förder flüssigkeitsgekühlten Kappe.

Die andere (kalte) Seite des Seebeck-Elements ist mit einer Wärmesenke möglichst niedrigen Temperaturniveaus zu verbinden. Bei dem erfindungsgemäßen Pumpenaggregat wird das Fördermedium der Pumpe als Kühlmedium genutzt. Dann wird also zweckmäßigerweise die andere (kalte) Seite des Seebeck-Elements durch den Förderstrom oder einen Teilförderstrom der Pumpe gekühlt.

Wenn das Pumpenaggregat einen Nasslaufmotor aufweist, wie dies bei Kreiselpumpen insbesondere zur Förderung von Wasser häufig der Fall ist, dann es ist zweckmäßig, das Seebeck-Element oder die Seebeck-Elemente wärmeleitend mit dem Spaltrohr des Motors zu verbinden, und zwar vorzugsweise auf der trockenen Seite des Spatrohrs anzuordnen. Ein Seebeck-Element kann dann zwischen Stator und Spaltrohr angeordnet werden, sei es radial oder auch axial, wenn das Spaltrohr mit einem entsprechenden Flansch versehen ist.

Die erfindungsgemäße Lösung ist insbesondere dann vorteilhaft anwendbar, wenn Pumpenaggregat und Frequenzumrichter eine bauliche Einheit bilden. Dann nämlich kann die Einspeisung in den Zwischenkreis des Frequenzumrichters auf kurzen Wegen erfolgen, es können gegebenenfalls gedruckte Leiterbahnen zwischen Seebeck-Element und Zwischenkreis eingesetzt werden. Des Weiteren kann auch die Abwärme des Frequenzumrichters in gleicher Weise genutzt werden, wenn diese entweder entsprechend über einen Bereich abgeführt wird, dem ein Seebeck-Element zugeordnet ist oder wenn ein gesondertes Seebeck-Element hierfür vorgesehen ist.

Die Erfindung ist nachfolgend anhand eines in den Figuren dargestellten Ausführungsbeispiels näher erläutert. Es zeigen:
- Fig. 1: ein Schaltbild eines frequenzumrichtergesteuerten Elektromotors mit Seebeck-Element und dessen Einspeisung in den Frequenzumrichter,
- Fig. 2.: in stark schematisierter vereinfachter Darstellung den Schnitt durch ein Nasslaufkreiselpumpenaggregat, und
- Fig. 3: den Schnitt durch ein kappengekühltes Pumpenaggregat in Darstellung nach Fig. 2.

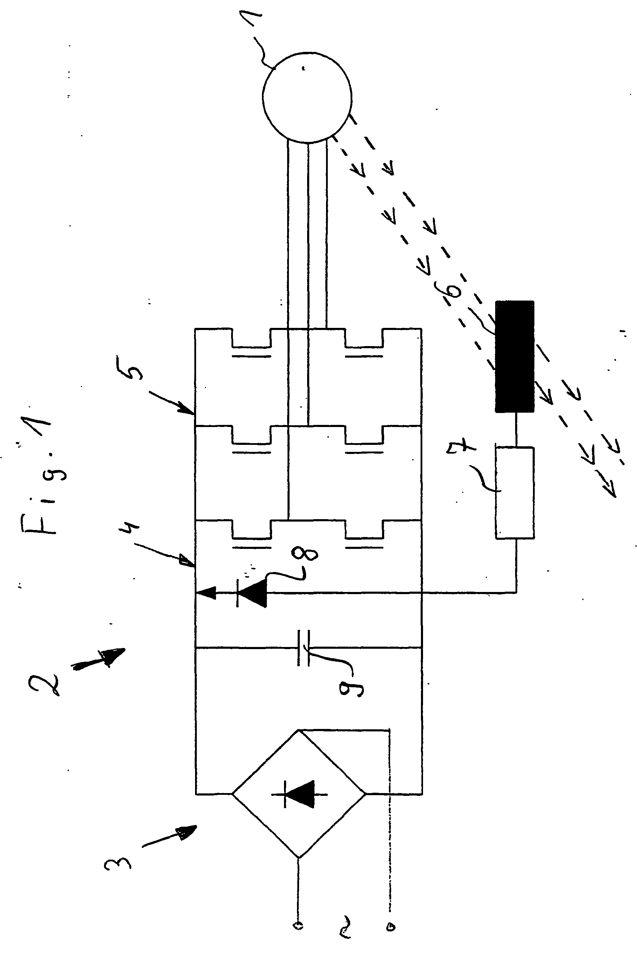

In Fig. 1 ist ein Elektromotor 1 in Form eines Asynchronmotors dargestellt, der von einem Frequenzumrichter 2 angesteuert wird. Der Frequenzumrichter 2 besteht in an sich bekannter Weise aus einem Eingangskreis 3, einem Zwischenkreis 4 sowie einem Leistungskreis 5. Im Eingangskreis 3 wird die Versorgungsspannung gleichgerichtet, im Zwischenkreis auf ein konstantes Spannungsniveau gebracht und im Leistungskreis 5 über entsprechende Schalter den Motorwicklungen beaufschlagt. Die Abwärme des Motors 1 wird einem Seebeck-Element 6 zugeführt, dass hier stellvertretend für ein oder mehrere in Reihe und oder Parallel geschaltete Seebeck-Elemente steht. Der Wärmefluss zwischen Elektromotor 1, Seebeck-Element 6 und einer Wärmesenke ist in Fig. 1 durch unterbrochene Doppelpfeillinien symbolisiert dargestellt. Das Seebeck-Element 6 ist mit einem DC/DC-Wandler 7 verbunden, welcher die je nach Temperaturdifferenz schwankende Spannung des Seebeck-Elements 6 auf das Spannungsniveau des Zwischenkreises 4 stabilisiert. Der DC/DC-Wandler 7 speist über eine Rückflusssperre in Form einer Diode 8 in den Zwischenkreis 4 ein. Die auf diese Weise vom Seebeck-Element 6 in den Frequenzumrichter 2 eingespeiste Energie wird im Zwischenkreis 4, insbesondere im Zwischenkreiskondensator 9 gespeichert und bedarfsweise, durch den Leistungskreis 5 dem Motor 1 aufgeschaltet.

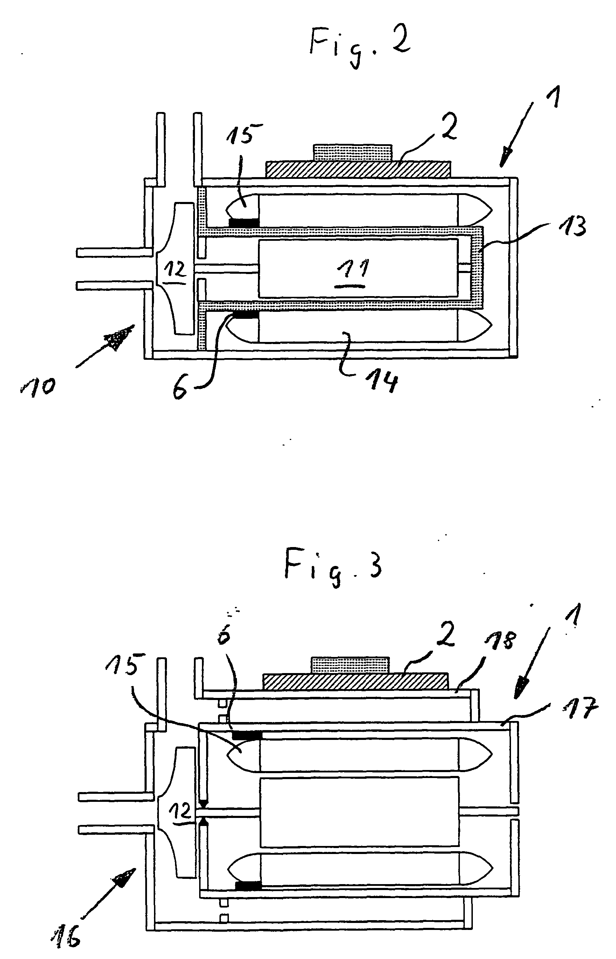

Bei dem Ausführungsbeispiel nach Fig. 2 ist der Elektromotor 1 als Spaltrohrmotor ausgebildet und bildet Teil eines Pumpenaggregats 10, dessen Rotor 11 in an sich bekannter Weise ein Kreiselrad 12 antreibt. Der Rotor 11 ist innerhalb eines Spaltrohrtopfes 13 drehbar gelagert, der vom Stator des Elektromotors 1 umgeben ist. Der aus Statorblechpaket 14 und Statorwicklung gebildete Stator weist im Bereich der Wicklungsköpfe 15 freiliegende Motorwicklungen auf. In diesem Bereich ist ein Seebeck-Element 6 angeordnet, und zwar zu einer Seite an dem Wicklungskopf 15 anliegend und zur anderen Seite am Spaltrohrtopf 13 anliegend gegebenenfalls mit diesem verbacken oder verklebt. Der Spaltrohrtopf 13 ist Fluid gefüllt und wird durch das Förderfluid der Pumpe durchströmt. Auf diese Weise bildet das förderfluidgekühlte Spaltrohr 13 die Wärmesenke, wohingegen der Wicklungskopf 15 den warmen Teil des Seebeck-Elementes 6 bildet.

Das Seebeck-Element 6 kann auch stirnseitig zwischen dem Flansch des Spaltrohrtopfes 13 und dem Wicklungskopf 15 angeordnet sein. Integral mit dem Pumpenaggregat 10 ausgebildet ist der Frequenzumrichter 2, der Teil der elektronischen Motorsteuerung bildet.

Die Ausführungsvariante nach Fig. 3 umfasst ebenfalls ein Pumpenaggregat 16, jedoch im Unterschied zu der Ausführung nach Fig. 2 einen Trockenläufer, der kappengekühlt ist. Das Statorgehäuse 17 ist von einer Kappe 18 umgeben, der zwischen Kappe 18 und Statorgehäuse 17 gebildete Freiraum ist von Förderfluid durchströmt. Die Öffnungen zum Pumpenraum sind auf unterschiedlichem Druckniveau angeordnet, so dass eine kontinuierliche Durchströmung des Kappenraums gewährleistet ist. In diesem Fall ist das Seebeck-Element 6 zwischen Wicklungskopf 15 und Statorgehäuse angeordnet, so dass auf der einen Seite des Seebeck-Elements die in der Motorwicklung entstehende Wärme und auf der anderen Seite das Förderfluid als Wärmesenke anstehen.

Auch bei den vorbeschriebenen Ausführungsformen ist sicherzustellen, dass der Wärmeübergang zwischen Motorwicklung und Wärmesenke nach Möglichkeit weitgehend durch das Seebeck-Element 6 erfolgt und nicht durch benachbarte Wärmebrücken.

### Bezugszeichenliste

- 1 -: Elektromotor
- 2 -: Frequenzumrichter
- 3 -: Eingangskreis
- 4 -: Zwischenkreis
- 5 -: Leistungskreis
- 6 -: Seebeck-Element
- 7 -: DC/DC Konverter
- 8 -: Diode
- 9 -: Zwischenkreiskondensator
- 10 -: Pumpenaggregat
- 11 -: Rotor
- 12 -: Kreiselrad
- 13 -: Spaltrohrtopf
- 14 -: Statorblechpaket
- 15 -: Wicklungskopf
- 16 -: Pumpenaggregat
- 17 -: Statorgehäuse
- 18 -: Kappe

## Patentansprüche

1. Pumpenaggregat mit einem Elektromotor (1) mit einer elektronischen Steuerung (2), die einen Frequenzumrichter (2) umfasst, wobei mindestens ein Seebeck-Element (6) vorgesehen ist, dessen eine Seite wärmeleitend mit dem Motor (1) verbunden ist und dessen andere Seite mit dem Fördermedium der Pumpe als Kühlmedium in Wärmeleitverbindung steht, wobei die elektrische Ausgangsleistung des Seebeck-Elements (6) in den Zwischenkreis (4) des Frequenzumrichters einspeist, und wobei zwischen Seebeck-Element (6) und Zwischenkreis (4) des Frequenzumrichters (2) ein DC/DC-Konverter (7) geschaltet ist.

2. Pumpenaggregat nach Anspruch 1, **dadurch gekennzeichnet, dass** mindestens ein Seebeck-Element (6) mit einer Seite wärmeleitend mit einer Statorwicklung (23), vorzugsweie im Bereich des Wicklungskopfes (15), verbunden ist.

3. Pumpenaggregat nach Anspruch 1, **dadurch gekennzeichnet, dass** der Motor (1) ein kappengekühlter Motor ist und dass ein Seebeck-Element (6) zwischen Stator und Kappe (18), vorzugsweise auf der Innenseite des Statorgehäuses (17) angeordnet ist.

4. Pumpenaggregat nach Anspruch 1, **dadurch gekennzeichnet, dass** der Motor (1) ein Nasslaufmotor ist und dass ein Seebeck-Element (6) mit seiner kalten Seite wärmeleitend mit dem Spaltrohr (13) des Motors verbunden ist.

5. Pumpenaggregat nach Anspruch 4, **dadurch gekennzeichnet, dass** das Seebeck-Element (6) auf der trockenen Seite des Spaltrohrs (13) angeordnet ist.

6. Pumpenaggregat nach einem der vorhergehenden Ansprüche, **dadurch gekennzeichnet, dass** der Frequenzumrichter (2) eine bauliche Einheit mit dem Motor (1) bildet.

7. Pumpenaggregat nach einem der vorhergehenden Ansprüche, **dadurch gekennzeichnet, dass** der Frequenzumrichter (2) eine bauliche Einheit mit dem Pumpenaggregat (10, 16) bildet.

## Claims

1. Pump assembly with an electric motor (1) having an electronic controller (2), which comprises a frequency converter (2), at least one Seebeck element (6) being provided, one of whose sides is thermally conductively connected to the motor (1) and whose other side is thermally conductively connected to the delivery medium of the pump as the cooling medium, the electrical output power of the Seebeck element (6) being fed into the intermediate circuit (4) of the frequency converter, and a DC/DC converter (7) being connected between the Seebeck element (6) and the intermediate circuit (4) of the frequency converter (2).

2. Pump assembly according to Claim 1, **characterized in that** at least one Seebeck element (6) is thermally conductively connected with one side to a stator winding (23), preferably in the region of the winding head (15).

3. Pump assembly according to Claim 1, **characterized in that** the motor (1) is a cap-cooled motor, and **in that** a Seebeck element (6) is arranged between the stator and the cap (18), preferably on the inside of the stator housing (17).

4. Pump assembly according to Claim 1, **characterized in that** the motor (1) is a wet-rotor motor, and **in that** a Seebeck element (6) is thermally conductively connected with its cold side to the split cage (13) of the motor.

5. Pump assembly according to Claim 4. **characterized in that** the Seebeck element (6) is arranged on the dry side of the split cage (13).

6. Pump assembly according to one of the preceding claims, **characterized in that** the frequency converter (2) forms a structural unit with the motor (1).

7. Pump assembly according to one of the preceding claims, **characterized in that** the frequency converter (2) forms a structural unit with the pump assembly (10, 16).

## Revendications

1. Groupe moto-pompe comportant un moteur électrique (1) doté d'une commande électronique (2) qui comprend un convertisseur de fréquence (2), au moins un élément à effet Seebeck (6) étant prévu, dont un côté est relié au moteur (1) par une liaison conductrice de la chaleur et dont l'autre côté est placé en relation de conduction de chaleur avec le fluide transporté par la pompe, jouant le rôle de fluide de refroidissement, la puissance électrique de sortie de l'élément à effet Seebeck (6) étant alors injectée dans le circuit intermédiaire (4) du convertisseur de fréquence, tandis qu'entre l'élément à effet Seebeck (6) et le circuit intermédiaire (4) du convertisseur de fréquence (2) est connecté un convertisseur DC/DC (7).

2. Groupe moto-pompe selon la revendication 1, **caractérisé en ce qu'**au moins un élément à effet Seebeck (6) est, avec un côté, relié, par une liaison conductrice de la chaleur, à un enroulement de stator (23), de préférence dans la région de la tête d'enroulement (15).

3. Groupe moto-pompe selon la revendication 1, **caractérisé en ce que** le moteur (1) est un moteur refroidi par capotage et **en ce qu'**un élément à effet Seebeck (6) est disposé entre le stator et le capot (18), de préférence sur la face intérieure du carter de stator (17).

4. Groupe moto-pompe selon la revendication 1, **caractérisé en ce que** le moteur (1) est un moteur à rotor immergé et **en ce qu'**un élément à effet Seebeck (6) est, avec son côté froid, relié, par une liaison conductrice de la chaleur, à la gaine (13) du moteur.

5. Groupe moto-pompe selon la revendication 4, **caractérisé en ce que** l'élément à effet Seebeck (6) est disposé sur la face sèche de la gaine (13).

6. Groupe moto-pompe selon l'une des revendications précédentes, **caractérisé en ce que** le convertisseur de fréquence (2) forme un ensemble structurel avec le moteur (1).

7. Groupe moto-pompe selon l'une des revendications précédentes, **caractérisé en ce que** le convertisseur de fréquence (2) forme un ensemble structurel avec le groupe moto-pompe (10, 16).
